# EUROPEAN PATENT SPECIFICATION

(11) **EP 2 505 988 B1**
(45) Date of publication and mention of the grant of the patent: **30.10.2013**
(21) Application number: 12159310.7
(22) Date of filing: 13.03.2012
(51) Int. Cl.: G01N 21/64, G01N 21/25, G01J 3/10

(54) **Imaging device, imaging program, imaging method, and computer readable storage medium**
Abbildungsvorrichtung, Abbildungsprogramm, Abbildungsverfahren und computerlesbares Speichermedium
Dispositif d'imagerie, programme d'imagerie, procédé d'imagerie et support de stockage lisible par ordinateur

(30) Priority: 29.03.2011 JP 2011072917
(43) Date of publication of application: 03.10.2012
(73) Proprietor: Fujifilm Corporation, Minato-ku Tokyo (JP)
(72) Inventor: Makino, Kazuhiro, Kanagawa (JP)
(74) Representative: Klunker . Schmitt-Nilson . Hirsch

(56) References cited:
- US-A- 5 672 881
- US-A1- 2004 063 105
- US-A1- 2004 262 534
- US-A1- 2005 051 745
- US-A1- 2008 240 747
- WU S ET AL: "High-sensitivity fluorescence detector for fluorescein isothiocyanate derivatives of amino acids separated by capillary zone electrophoresis", JOURNAL OF CHROMATOGRAPHY, ELSEVIER SCIENCE PUBLISHERS B.V, NL, vol. 480, 1 January 1989 (1989-01-01), pages 141-155, XP026483411, ISSN: 0021-9673, DOI: 10.1016/S0021-9673(01)84284-9 [retrieved on 1989-01-01]

## Description

### BACKGROUND

### Technical Field

The present invention relates to an imaging device, an imaging program, an imaging method and a computer readable storage medium, and in particular, relates to an imaging device, an imaging program, an imaging method and a computer readable storage medium having cooling means for cooling an image pick-up element.

### Related Art

In the field of biochemistry for example, there has conventionally been proposed an imaging device that picks-up, as a subject, a fluorescent sample that emits fluorescent light due to excitation light being illuminated and is labeled by a fluorescent dye, or picks-up, as a subject, a chemiluminescent sample that contacts a chemiluminescent substrate and emits light (see, for example, Japanese Patent Application Laid-Open (JP-A) No. 2005-283322).

In such an imaging device, when imaging fluorescent samples having a broad range of fluorescent intensities, there is the problem that, even if exposure is carried out for a short time, regions where the fluorescent intensity is strong become saturated, and conversely, regions where the fluorescent intensity is weak cannot be sufficiently detected.

Thus, JP-A No. 2003-232733 discloses a fluorescent image detecting method that illuminates weak excitation light and strong excitation light alternately in one pixel, and detects the fluorescent lights of both intensities, and detects fluorescent intensities from these two groups of data, thereby carrying out fluorescent light detection of a wide dynamic range.

However, the technique disclosed in above-described JP-A No. 2003-232733 has the problem that it cannot be applied in cases in which fluorescent samples are arrayed in a two-dimensional form.

US 2004/262534 A1 ([0058]-[0060]; [0064]; [0068]-[0074]; [0099]) discloses a micro array reader for an array of DNA probes which emit fluorescence on excitation and which further comprises an automated selective light modulator located in an illumination light path which defines the amount of illumination light when the upstream selective light modulator is modulated. The reader dynamically modifies, via a modulator, the amount of light directed at specific target spots, such that dimmer target spots receive more excitation light and overly bright target spots receive less light so as to increase or decrease their measured brightness to more desirable ranges better suited for the detector.

Specific mirrors of the DMD or other SLM are correlated with i.e. map to specific pixels or areas of the CCD detector and correspond therefore to particular target spots on the sample. Once mapping has been done for a particular set up, typically it does not need to be repeated until either the DMD or CCD is moved relative to the other.

### SUMMARY

The present invention was made in order to overcome the above-described problems, and an object thereof is to provide an imaging device, an imaging program, an imaging method and a computer readable storage medium that can precisely detect fluorescent samples in a wide dynamic range, even in a subject in which fluorescent samples are arrayed in a two-dimensional form.

An imaging device according to the present invention is defined in claim 1.

An imaging program according to the present invention is defined in claim 5.

An imaging method according to the present invention is defined in claim 4.

A computer readable storage medium storing a program that causes a computer to execute an imaging method is defined in claim 6.

### BRIEF DESCRIPTION OF THE DRAWINGS

An exemplary embodiment of the present invention will be described in detail based on the following figures, wherein:
Fig. 1 is a perspective view of an imaging system;
Fig. 2 is a front view of an imaging device;
Fig. 3 is a schematic block diagram of an image processing device 100;
Fig. 4 is a schematic block diagram of an imaging section 30;
Fig. 5 is a plan view of an epi-illumination light source;
Fig. 6 is a flowchart of processings executed at a CPU of a main controller; and
Fig. 7 is a drawing showing an example of a pre-exposure image.

### DETAILED DESCRIPTION

An exemplary embodiment of the present invention is described hereinafter with reference to the drawings.

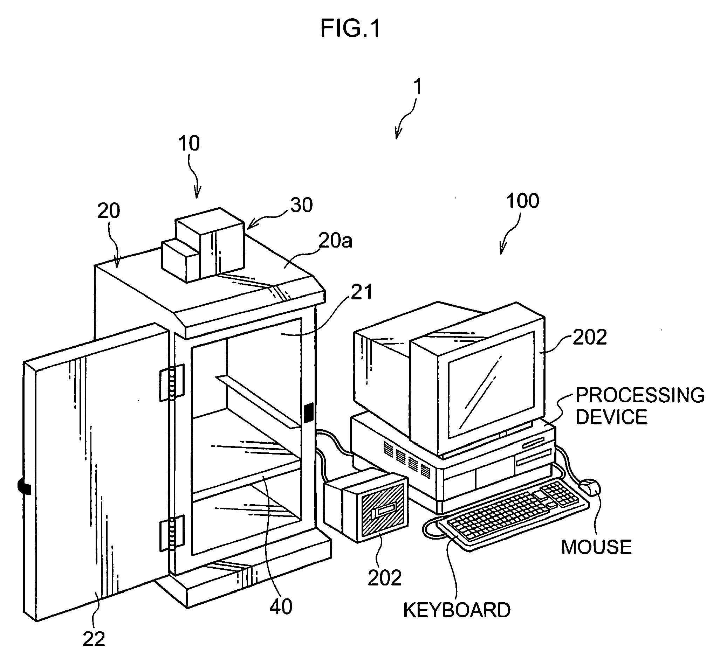

Fig. 1 is a perspective view showing an example of an imaging system that uses an imaging device relating to the present invention. An imaging system 1 is an imaging system that images a subject by illuminating excitation light in accordance with the subject, and acquires a captured image of the subject. The imaging system 1 is structured to include an imaging device 10 and an image processing device 100.

The imaging device 10 outputs, to the image processing device 100, image data of the subject that is obtained by imaging the subject. The image processing device 100 subjects the received image data to predetermined image processings as needed, and displays the image data on a display 202.

Note that the subject may be, for example a fluorescent sample, but is not limited to these.

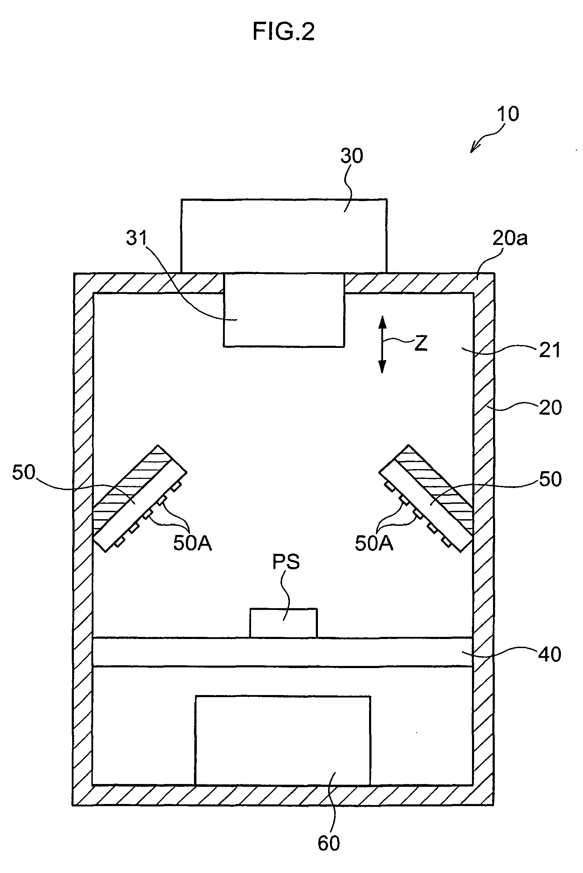

A front view of a state in which a cover 22 (see Fig. 1) of the imaging device 10 is open is shown in Fig. 2. As shown in Fig. 2, the imaging device 10 has a subject placement portion 40 on which a subject PS is placed, a housing 20 that accommodates therein the subject placement portion 40, an imaging section 30 that images the subject PS that is placed on the subject placement portion 40, epi-illumination light sources 50 that are disposed within the housing 20 and illuminate excitation light onto the subject PS, and a transmission light source 60.

The housing 20 has a hollow portion 21 that is formed in a substantially parallelepiped shape, and has, at the interior thereof, the subject placement portion 40 on which the subject PS is placed. The cover 22 shown in Fig. 1 is mounted to the housing 20 so as to be able to open and close. A user opens the cover 22 and can accommodate the subject PS within the housing 20. In this way, the housing 20 structures a dark box that is such that external light does not enter into the hollow portion 21.

The imaging device 10 is fixed to a top surface 20a of the housing 20. Although details thereof are described later, the imaging device 10 is structured to include an image pick-up element such as a CCD or the like for example. A cooling element is mounted to the image pick-up element. By cooling the image pick-up element, noise components due to dark current are prevented from being included in the captured image information.

A lens section 31 is mounted to the imaging device 10. The lens section 31 is mounted so as to be movable in the direction of arrow Z, in order to adjust the focus on the subject PS.

The epi-illumination light sources 50 illuminate excitation light toward the subject PS that is disposed on the subject placement portion 40. The transmission light source 60 illuminates excitation light from beneath the subject PS. When a fluorescent sample is imaged, excitation light is illuminated onto the subject from at least one of the epi-illumination light sources 50 and the transmission light source 60, in accordance with the subject.

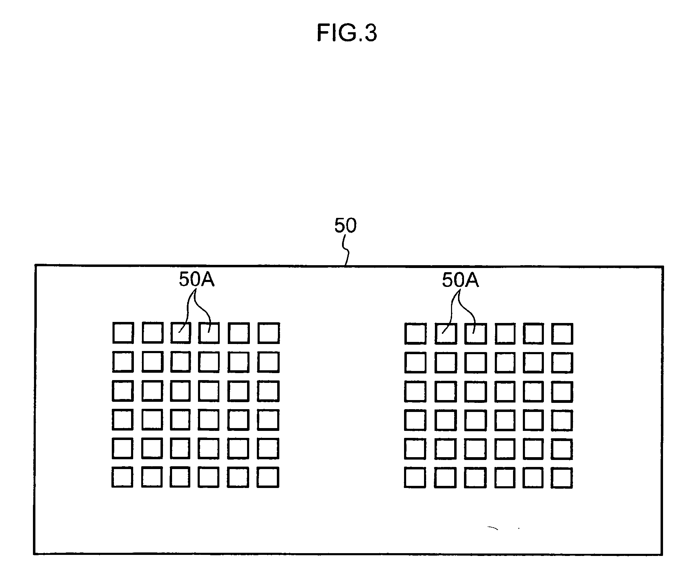

A plan view of the epi-illumination light source 50 is shown in Fig. 3. As shown in Fig. 2 and Fig. 3, the epi-illumination light source 50 has plural light source elements 50A that are disposed in a two-dimensional form. Note that LEDs, for example, can be used as the light source elements 50A, but the light source elements 50A are not limited to LEDs.

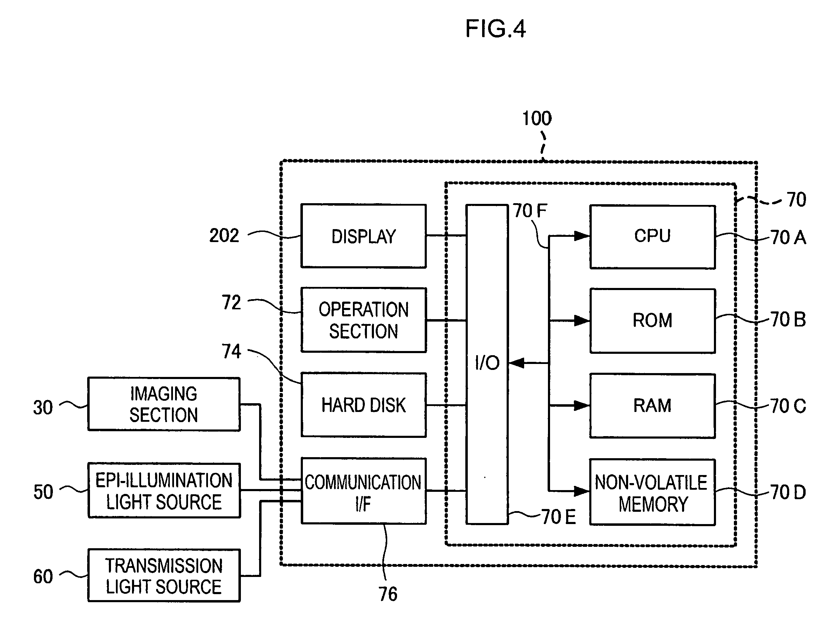

The schematic structure of the image processing device 100 is shown in Fig. 4. As shown in Fig. 4, the image processing device 100 is structured to include a main controller 70.

The main controller 70 is structured by a CPU (Central Processing Unit) 70A (pre-exposure means, specifying means, actual exposure means), a ROM (Read Only Memory) 70B, a RAM (Random Access Memory) 70C, a non-volatile memory 70D and an input/output interface (I/O) 70E respectively being connected via a bus 70F.

The display 202, an operation section 72, a hard disk 74 (storage means), and a communication I/F 76 are connected to the I/O 70E. The main controller 70 collectively controls these respective functional sections.

The display 202 is structured by, for example, a CRT, a liquid crystal display device, or the like, and displays images captured at the imaging device 10, and displays screens for carrying out various types of settings and instructions with respect to the imaging device 10, and the like.

The operation section 72 is structured to include a mouse, a keyboard and the like, and is for a user to give various types of instructions to the imaging device 10 by operating the operation section 72.

The hard disk 74 stores image data of the captured images that are captured at the imaging device 10, a control program that is described later, various types of data needed for control, and the like.

The communication interface (I/F) 76 is connected to the imaging section 30, the epi-illumination light sources 50 and the transmission light source 60 of the imaging device 10. Via the communication I/F 76, the CPU 70A instructs the imaging section 30 to carry out imaging under imaging conditions that correspond to the type of the subject, and, when excitation light is to be illuminated onto the subject, instructs at least one of the epi-illumination light sources 50 and the transmission light source 60 to illuminate excitation light, and receives image data of the image captured at the imaging section 30 and carries out image processings and the like thereon.

Further, the CPU 70A can individually control the lighting of the plural light source elements 50A of the epi-illumination light sources 50.

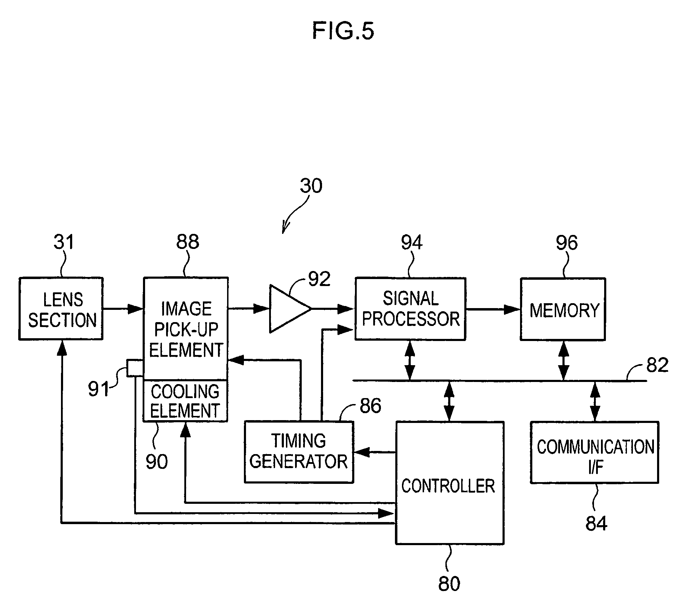

The schematic structure of the imaging section 30 is shown in Fig. 5. As shown in Fig. 5, the imaging section 30 has a controller 80, and the controller 80 is connected to a communication interface (I/F) 84 via a bus 82. The communication I/F 84 is connected to the communication I/F 76 of the image processing device 100.

When image capturing is instructed from the image processing device 100 via the communication I/F 84, the controller 80 controls the respective sections in accordance with the contents of the instruction, and images the subject PS that is disposed on the subject placement portion 40, and transmits the image data of the captured image thereof to the image processing device 100 via the communication I/F 84.

The lens section 31, a timing generator 86, a cooling element 90 that cools an image pick-up element 88, and a temperature sensor 91 that detects the temperature of the image pick-up element 88, are connected to the controller 80.

The controller 80 is structured by a computer that includes, for example, a CPU, a ROM, a RAM, a non-volatile ROM, and the like that are not shown. A control program that collectively controls the imaging section 30 is stored in the non-volatile ROM. Due to the CPU reading-in and executing the control program, the CPU controls the respective sections that are connected to the controller 80.

Although not illustrated, the lens section 31 is structured to include, for example, a lens group formed from plural optical lenses, a diaphragm adjusting mechanism, a zoom mechanism, an automatic focusing mechanism, and the like. The lens group is provided so as to be movable in the direction of arrow Z in order to adjust the focus on the subject PS in Fig. 2. The diaphragm adjusting mechanism varies the diameter of an aperture and adjusts the amount of light that is incident on the image pick-up element 88. The zoom mechanism adjusts the position at which the lens is disposed and carries out zooming. The automatic focusing mechanism carries out focus adjustment in accordance with the distance between the subject PS and the imaging device 10.

The light from the subject PS is transmitted through the lens section 31 and focused on the image pick-up element 88 as a subject image.

Although not illustrated, the image pick-up element 88 is structured to include light-receiving portions that correspond respectively to plural pixels, horizontal transfer paths, vertical transfer paths, and the like. The image pick-up element 88 has the function of photoelectrically converting the subject image, that is focused on the image pick-up surface thereof, into electric signals. For example, an image sensor such as a charge coupled device (CCD), a metal oxide semiconductor (MOS), or the like is used for the image pick-up element 88.

The image pick-up element 88 is controlled by timing signals from the timing generator 86, and, at the respective light-receiving portions, photoelectrically-converts the incident light from the subject PS.

The signal charges that are photoelectrically-converted at the image pick-up element 88 become analog signals that are voltage-converted by a charge-voltage conversion amplifier 92, and are outputted to a signal processor 94.

The timing generator 86 has an oscillator that generates a basic clock (system clock) that operates the imaging section 30. For example, the timing generator 86 supplies the basic clock to the respective sections, and frequency-divides the basic clock and generates various timing signals. For example, the timing generator 86 generates a vertical synchronization signal, a horizontal synchronization signal, and a timing signal that expresses the electronic shutter pulse or the like, and supplies these signals to the image pick-up element 88. Further, the timing generator 86 generates timing signals such as a sampling pulse for correlated double sampling, a conversion clock for analog/digital conversion, and the like, and supplies the timing signals to the signal processor 94.

The signal processor 94 is controlled by the timing signals from the timing generator 86, and is structured to include a correlated double sampling (CDS) circuit that carries out correlated double sampling processing on the inputted analog signal, and an analog/digital (A/D) converter that converts the analog signal, on which the correlated double sampling processing was carried out, into a digital signal, and the like. Or, the signal processor 94 is structured to include a processor that A/D samples a feed-through portion and a signal portion, and carries out the processing of computing difference data of the respective digital values of the feed-through portion and the signal portion.

Correlated double sampling processing is a processing that obtains pixel data by obtaining the difference between the level of the feed-through portion and the level of the signal portion corresponding to the image portion, that are included in the output signal of each one image-receiving element (pixel) of the image pick-up element 88, for the purpose of reducing noise and the like that is included in the output signals of the image pick-up element 88.

The digital signal, that has been subjected to the correlated double sampling processing, is outputted to the memory 96 and primarily stored therein. The image data that is primarily stored in the memory 96 is transmitted to the image processing device 100 via the communication I/F 84.

The cooling element 90 is structured by, for example, a Peltier element or the like, and the cooling temperature thereof is controlled by the controller 80. There are cases in which the temperature of the image pick-up element 88 rises and the image quality is adversely affected due to an increase in dark current or the like. Thus, at the controller 80, the cooling element 90 is PWM (Pulse Width Modulation) controlled and the image pick-up element 88 is cooled, while the temperature of the image pick-up element 88 detected by the temperature sensor 91 is monitored, so that the temperature of the image pick-up element 88 is maintained at a cooled temperature instructed by the image processing device 100.

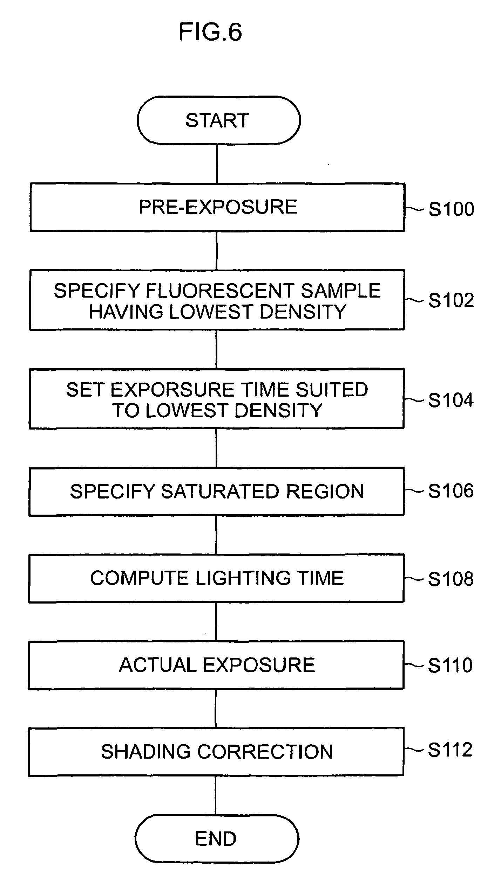

Imaging processing, that is executed at the CPU 70A of the main controller 70, is described next as the operation of the present example with reference to the flowchart shown in Fig. 6.

Note that the flowchart shown in Fig. 6 is executed when the operation section 72 is operated and imaging is instructed.

First, in step S100, the CPU 70A carries out imaging by pre-exposure. In this pre-exposure, all of the light source elements 50A of the epi-illumination light sources 50 are lit, and the subject PS is exposed for a predetermined initial exposure time and imaged. This pre-exposure is called exposure that is carried out in advance in order to specify a region that will be saturated when the subject PS is exposed for an exposure time of actual exposure that is described later.

In step S102, the CPU 70A extracts an image of fluorescent samples that is included in the pre-exposure image captured by the pre-exposure, and specifies, within the extracted image of the fluorescent samples, the fluorescent sample of the lowest density. Note that the extraction of the image of the fluorescent samples from the pre-exposure image can be carried out by known image processing such as, for example, binarization or edge enhancement or the like.

In step S104, the CPU 70A determines an exposure time that is optimal, in the case of actual exposure, for the fluorescent sample of the lowest density that was specified in step S102, i.e., an exposure time at which the density of the fluorescent sample can be detected without saturation, and sets this exposure time as the exposure time for the actual exposure. This may be carried out by having the user designate the exposure time that is suited to the lowest density. Or, table data, that prescribes in advance relationships of correspondence between lowest densities and exposure times, may be stored in the hard disk 74, and the exposure time corresponding to the lowest density may be set automatically on the basis of this table data.

In step S106, the CPU 70A specifies a fluorescent sample that will be saturated in a case in which actual exposure is carried out for the exposure time that was set in step S104, and specifies the region that includes that fluorescent sample as a saturated region. This is carried out by, for example, for the density of each fluorescent sample, judging whether or not a value, that is computed from a predetermined saturation function whose parameters are density and exposure time, is greater than or equal to a predetermined saturation threshold value. Then, the CPU 70A specifies, as a saturated region, a region that includes a fluorescent sample for which the value, that was computed from the saturation function, is greater than or equal to the saturation threshold value.

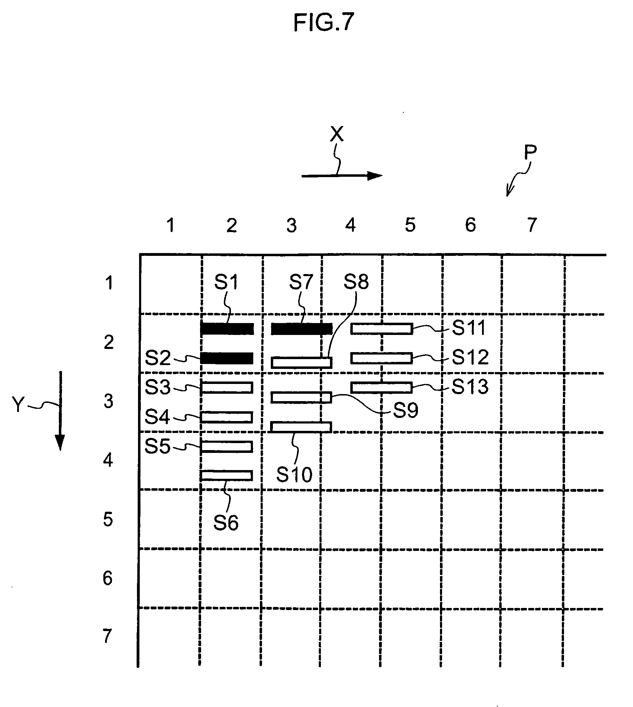

Specifying of a saturated region is described hereinafter. For example, as shown in Fig. 7, images of plural, strip-shaped fluorescent samples S1 through S13 are arrayed in a two-dimensional form in a pre-exposure image P. Note that, in Fig. 7, the pre-exposure image P is divided into plural regions. In the present example, the position of each region is expressed as x-y, where the position in the X direction in Fig. 7 is expressed by x (= 1, 2, 3, ...) and the position in the Y direction, that intersects the X direction, is expressed by y (1, 2, 3, ...). Further, in Fig. 7, the higher the density of the image (the blacker the color in Fig. 7), the stronger the fluorescent sample thereof emits light. In this case, for example, given that the fluorescent samples S1, S2, S7 will be saturated if actual exposure is carried out at the exposure time set in step 104, regions 2-2, 3-2 that includes these fluorescent samples S1, S2, S7 are specified as saturated regions.

In step S108, the CPU 70A specifies the light source elements 50A corresponding to the saturated regions, and computes the lighting times of these light source elements. The specifying of the light source elements that correspond to the saturated regions is carried out on the basis of light source element table data that expresses the relationships of correspondence between the regions where the respective light source elements illuminate light most strongly and the light source elements, when the respective light source elements are lit one-by-one. This light source element table data is prepared on the basis of results of lighting the light source elements one-by-one and measuring which region is most strongly illuminated, and is stored in advance in the hard disk 74.

In the example of Fig. 7, because the regions 2-2 and 3-2 are saturated regions, the light source elements 50A corresponding to these regions are specified from the light source element table data.

After specifying the light source elements 50A of the saturated regions, the CPU 70A computes a lighting time in the actual exposure, for each of the specified light source elements 50A. For example, the time, that corresponds to the amount by which the density of the fluorescent sample included in the saturated region exceeds an upper limit value of a predetermined density that is not saturated, is subtracted from the exposure time of the actual exposure, and this time is made to be the lighting time of the saturated region. For example, if the density that is highest among the fluorescent samples S1, S2 that are included in saturated region 2-2 shown in Fig. 7 exceeds, by 20%, the upper limit value of a predetermined non-saturated density, the lighting time of the light source element 50A that corresponds to saturated region 2-2 is made to be a time that is reduced by 20% from the exposure time of the actual exposure that was set in step S104. In this way, the fluorescent sample, that has the highest density among the fluorescent samples S1, S2 included in the saturated region 2-2, can be prevented from becoming saturated in the actual exposure.

Note that the lighting time of the light source element 50A, that corresponds to the saturated region 2-2, may be reduced by greater than or equal to the time that corresponds to the amount by which the upper limit value of the non-saturated density is exceeded. For example, in the above-described example, the lighting time of the light source element 50A that corresponds to the saturated region 2-2 may be made to be a time that is reduced by greater than or equal to 20% from the exposure time of the actual exposure, or the light source element 50A corresponding to the saturated region 2-2 may simply not be lit.

In step S110, the CPU 70A carries out actual exposure of the subject PS by causing the light source elements 50A corresponding to the non-saturated regions that are other than the saturated regions to be lit for the exposure time set in step S104, and causing the light source elements 50A corresponding to the saturated regions to be lit for the lighting times computed in step S108.

In step S112, shading correction is carried out on the actual exposure image that was captured by the actual exposure. This shading correction is carried out on the basis of a reference fluorescent plate image that is obtained by lighting the respective light source elements 50A one-by-one and imaging a reference fluorescent plate such as an acrylic plate or the like whose entire surface is a uniform density. The image data of the reference fluorescent plate image per light source element 50A is stored in advance in the hard disk 74.

Because the entire surface of the reference fluorescent plate is a uniform density, the densities of the respective regions of the reference fluorescent plate image that are illuminated by the respective light source elements 50A should be the same. However, because there is dispersion in the illumination intensities of the respective light source elements 50A, all of the regions are not the same density.

Therefore, in the present example, two-dimensional shading correction data is generated on the basis of the image data of the reference fluorescent plate image of the respective light source elements 50A, and the lighting times of the light source elements of the saturated regions. The actual exposure image is subjected to shading correction on the basis of this two-dimensional shading correction data.

This two-dimensional shading correction data is correction data of two dimensions that is formed from correction data of each region, and is data that is such that non-uniform density of the respective regions is eliminated by, for example, adding the correction data of the respective regions to the image data of the corresponding region of the actual exposure image. At this time, for example, in a case in which the light source element 50A that corresponds to a saturated region is to be turned off, i.e., in a case in which the lighting time thereof is to be made to be zero, the two-dimensional shading correction data may be generated excepting the image data of the reference fluorescent plate image that corresponds to that saturated region.

Further, in a case in which the lighting time of the light source element 50A corresponding to a saturated region is to be shortened rather than the light source element 50A being turned off, the reference fluorescent plate image data of that saturated region may be corrected in accordance with the proportion of the time by which the lighting time is to be shortened, and this may be used in generating the two-dimensional shading correction data.

In this way, in the present example, on the basis of a pre-exposure image, a saturated region that will be saturated if exposed for the exposure time of the actual exposure is specified, and actual exposure is carried out by shortening the lighting time of the light source element that corresponds to that saturated region. Therefore, even in a subject in which fluorescent samples are arrayed in a two-dimensional form, the fluorescent samples can be detected accurately in a broad dynamic range.

Note that, according to the invention when a saturated region exists in the initial pre-exposure, pre-exposure is carried out again with the light source element corresponding to that saturated region turned off, and, if the region that was saturated in the initial pre-exposure is again saturated, pre-exposure is carried out again with the light source elements, that are at the periphery of the light source element corresponding to that saturated region, turned off.

Further, the present examples and embodiments describes a case in which the present invention is applied to a device that images a fluorescent sample. However, the present invention is not limited to the same, and can be applied also to devices that capture microscopic images.

Further, the structure (see Fig. 1 through Fig. 5) of the imaging system 1 described is by way of example, and unnecessary portions may be deleted therefrom, or new portions may be added thereto, within a scope that does not deviate from the present invention as defined by the appended claims.

Further, the flow of the processings (see Fig. 6) of the control program described is also an example. Unnecessary steps may be eliminated therefrom, new steps may be added thereto, or the order of the processings may be rearranged, within a scope that does not deviate from the present invention as defined by the appended claims.

In accordance with the present disclosure, the plural light source elements are provided, and a saturated region, that is saturated when exposed for the exposure time of the actual exposure, is specified on the basis of the pre-exposure image. The actual exposure is carried out with the lighting time of the light source element corresponding to that saturated region being shortened. Therefore, even in a subject in which fluorescent samples are arrayed in a two-dimensional form, the fluorescent samples can be detected accurately in a broad dynamic range.

Note that, as a second aspect, the imaging device may have computing means for, on the basis of a density of the saturated region in the pre-exposure image, computing the lighting time of the light source element corresponding to the saturated region such that the saturated region is not saturated in the actual exposure.

Further, as a third aspect, the imaging device may have shading correction means for, on the basis of respective captured images obtained by respectively lighting the plural light source elements and imaging a reference fluorescent plate, and the lighting time of the light source element corresponding to the saturated region, generating shading correction data and carrying out shading correction.

In accordance with the present invention, there is the effect that, even in a subject in which fluorescent samples are arrayed in a two-dimensional form, the fluorescent samples can be detected accurately in a broad dynamic range.

## Claims

1. An imaging device (10) comprising:
a plurality of light source elements (50) that illuminate a subject;
an image pick-up element (10) that picks-up an image of the subject;
storage means (74) for storing relationships of correspondence between the plurality of light source elements and regions that are illuminated by the plurality of light source elements respectively;
pre-exposure means (70A) for lighting all of the plurality of light source elements and pre-exposing the subject whereby the pre-exposure means are configured such that when the pre-exposure means (70A) carries out pre-exposure again with the light source element (50A) corresponding to a saturated region turned off, and the saturated region is again saturated, the pre-exposure means carries out pre-exposure again with the light source elements at the periphery of the light source element corresponding to the saturated region turned off;
specifying means (70A), for, on the basis of the pre-exposure image of the subject that is picked-up by the image pick-up element due to the pre-exposure and output by the pre-exposure means, specifying saturated regions that would be saturated when exposed for an exposure time of actual exposure; and
actual exposure means (70A) for, on the basis of the relationships of correspondence, specifying light source elements that correspond to the saturated regions, and carrying out actual exposure by shortening the lighting times of the specified light source elements.

2. The imaging device of claim 1, comprising computing means for, on the basis of a density of the saturated region in the pre-exposure image, computing the lighting time of the light source element corresponding to the saturated region such that the saturated region is not saturated in the actual exposure.

3. The imaging device of claim 1 or claim 2, comprising shading correction means for, on the basis of respective captured images obtained by respectively lighting the plurality of light source elements and imaging a reference fluorescent plate, and the lighting time of the light source element corresponding to the saturated region, generating shading correction data and carrying out shading correction.

4. An imaging method comprising:
lighting all of a plurality of light source elements that illuminate a subject, and pre-exposing the subject;
on the basis of a pre-exposure image of the subject that is picked-up by an image pick-up element, that picks-up an image of the subject, due to the pre-exposure, specifying a saturated region that is saturated when exposed for an exposure time of actual exposure;
specifying a light source element that corresponds to the saturated region, on the basis of the relationships of correspondence between the plurality of light source elements and regions that are illuminated by the plurality of light source elements respectively; and
carrying out actual exposure by shortening a lighting time of the specified light source element, whereby the pre-exposure means are configured such that when the pre-exposure means (70A) carries out pre-exposure again with the light source element (50A) corresponding to a saturated region turned off, and the saturated region is again saturated, the pre-exposure means carries out pre-exposure again with the light source elements at the periphery of the light source element corresponding to the saturated region turned off.

5. An imaging program adapted for causing a computer to perform the method of claim 4.

6. A computer readable storage medium (70A) storing a program that causes a computer (80) to execute an imaging method, the imaging method comprising:
lighting all of a plurality of light source elements (50, 50A) that illuminate a subject, and pre-exposing the subject;
on the basis of a pre-exposure image of the subject that is picked-up by an image pick-up element (10), that picks-up an image of the subject, due to the pre-exposure, specifying a saturated region that is saturated when exposed for an exposure time of actual exposure;
specifying a light source element (50A) that corresponds to the saturated region, on the basis of the relationships of correspondence between the plurality of light source elements (50A) and regions that are illuminated by the plurality of light source elements respectively; and
carrying out actual exposure by shortening a lighting time of the specified light source element, whereby the pre-exposure means are configured such that when the pre-exposure means (70A) carries out pre-exposure again with the light source element (50A) corresponding to a saturated region turned off, and the saturated region is again saturated, the pre-exposure means carries out pre-exposure again with the light source elements at the periphery of the light source element corresponding to the saturated region turned off.

## Patentansprüche

1. Abbildungsvorrichtung (10), umfassend:
eine Mehrzahl von Lichtquellenelementen (50), die ein Subjekt beleuchten;
ein Bildaufnahmeelement (10), das ein Bild des Subjekts aufnimmt;
eine Speichereinrichtung (74) zum Speichern von Beziehungen der Entsprechung zwischen den mehreren Lichtquellenelementen und Zonen, die von den mehreren Lichtquellenelementen beleuchtet werden;
eine Vorbelichtungseinrichtung (70A) zum Einschalten sämtlicher der mehreren Lichtquellenelemente und zum Vorbelichten des Subjekts, wobei die Vorbelichtungseinrichtung derart konfiguriert ist, dass wenn die Vorbelichtungseinrichtung (70A) eine Vorbelichtung erneut vornimmt, während das einer gesättigten Zone entsprechende Lichtquellenelement (50A) ausgeschaltet ist, und die gesättigte Zone erneut gesättigt wird, die Vorbelichtungseinrichtung erneut eine Vorbelichtung ausführt, bei der die Lichtquellenelemente an der Peripherie des der ausgeschalteten gesättigten Zone entsprechenden Lichtquellenelements ausgeschaltet sind;
eine Spezifiziereinrichtung (70A), um auf der Grundlage des Vorbelichtungsbilds des Subjekts, welches von dem Bildaufnahmeelement aufgrund der Vorbelichtung aufgenommen wurde und von der Vorbelichtungseinrichtung ausgegeben wurde, gesättigte Zonen zu spezifizieren, die bei Belichtung mit einer Belichtungszeit einer aktuellen Belichtung in Sättigung gehen würden; und
eine Aktuell-Belichtungseinrichtung (70A), um auf der Grundlage der Beziehungen der Entsprechung Lichtquellenelemente zu spezifizieren, die den gesättigten Zonen entsprechen, und eine aktuelle Belichtung auszuführen, indem die Belichtungszeiten der spezifizierten Lichtquellenelemente verkürzt werden.

2. Abbildungsvorrichtung nach Anspruch 1, umfassend eine Berechnungseinrichtung, um auf der Grundlage einer Dichte der gesättigten Zonen in dem Vorbelichtungsbild die Belichtungszeit des der gesättigten Zone entsprechenden Lichtquellenelements derart zu berechnen, dass die gesättigte Zone bei der aktuellen Belichtung nicht in Sättigung geht.

3. Abbildungsvorrichtung nach Anspruch 1 oder Anspruch 2, umfassend eine Abschattungskorrektureinrichtung, um auf der Grundlage jeweiliger aufgenommener Bilder, erhalten durch Einschalten der mehreren Lichtquellenelemente und Abbilden einer Referenz-Fluoreszenzplatte, und basierend auf der Einschaltzeit des der gesättigten Zone entsprechenden Lichtquellenelements Abschattungskorrekturdaten zu erzeugen und eine Abschattungskorrektur auszuführen.

4. Abbildungsverfahren, umfassend:
Einschalten sämtlicher von mehreren Lichtquellenelementen, die ein Subjekt beleuchten, und Vorbelichten des Subjekts;
auf der Grundlage eines Vorbelichtungsbilds des Subjekts, welches von einem Bildaufnahmeelement aufgenommen wurde, das ein Bild des Subjekts aufgrund der Vorbelichtung aufnimmt, Spezifizieren einer gesättigten Zone, die gesättigt wird, wenn sie über eine Belichtungszeit einer aktuellen Belichtung belichtet wird;
Spezifizieren eines Lichtquellenelements, welches der gesättigten Zone entspricht, auf der Grundlage der Beziehungen einer Entsprechung zwischen den mehreren Lichtquellenelementen und Zonen, die von den mehreren Lichtquellenelementen jeweils beleuchtet werden; und
Ausführen einer aktuellen Belichtung unter Verkürzung einer Einschaltzeit des spezifizierten Lichtquellenelements,
wobei die Vorbelichtungseinrichtung derart konfiguriert ist, dass wenn die Vorbelichtungseinrichtung (70A) eine Vorbelichtung erneut vornimmt, während das einer gesättigten Zone entsprechende Lichtquellenelement (50A) ausgeschaltet ist, und die gesättigte Zone erneut gesättigt wird, die Vorbelichtungseinrichtung erneut eine Vorbelichtung ausführt, bei der die Lichtquellenelemente an der Peripherie des der ausgeschalteten gesättigten Zone entsprechenden Lichtquellenelements ausgeschaltet sind.

5. Abbildungsprogramm, ausgebildet zum Veranlassen eines Computers, das Verfahren nach Anspruch 4 auszuführen.

6. Computerlesbares Speichermedium (70A), welches ein Programm speichert, das einen Computer (80) veranlasst, ein Abbildungsverfahren auszuführen, welches umfasst:
Einschalten sämtlicher von mehreren Lichtquellenelementen (50, 50A), die ein Subjekt beleuchten, und Vorbelichten des Subjekts;
auf der Grundlage eines Vorbelichtungsbilds des Subjekts, welches von einem Bildaufnahmeelement (10) aufgenommen wurde, das ein Bild des Subjekts aufgrund der Vorbelichtung aufnimmt, Spezifizieren einer gesättigten Zone, die gesättigt wird, wenn sie über eine Belichtungszeit einer aktuellen Belichtung belichtet wird;
Spezifizieren eines Lichtquellenelements (50A), welches der gesättigten Zone entspricht, auf der Grundlage der Beziehungen einer Entsprechung zwischen den mehreren Lichtquellenelementen (50A) und Zonen, die von den mehreren Lichtquellenelementen jeweils beleuchtet werden; und
Ausführen einer aktuellen Belichtung unter Verkürzung einer Einschaltzeit des spezifizierten Lichtquellenelements,
wobei die Vorbelichtungseinrichtung derart konfiguriert ist, dass wenn die Vorbelichtungseinrichtung (70A) eine Vorbelichtung erneut vornimmt, während das einer gesättigten Zone entsprechende Lichtquellenelement (50A) ausgeschaltet ist, und die gesättigte Zone erneut gesättigt wird, die Vorbelichtungseinrichtung erneut eine Vorbelichtung ausführt, bei der die Lichtquellenelemente an der Peripherie des der ausgeschalteten gesättigten Zone entsprechenden Lichtquellenelements ausgeschaltet sind.

## Revendications

1. Dispositif de formation d'image (10) comprenant :
une pluralité d'éléments de source de lumière (50) qui éclairent un sujet ;
un élément de capture d'image (10) qui capture une image du sujet ;
des moyens de mémorisation (74) pour mémoriser des relations de correspondance entre la pluralité d'éléments de source de lumière et les régions qui sont éclairées par la pluralité d'éléments de source de lumière respectivement ;
des moyens de pré-exposition (70A) pour allumer la totalité de la pluralité d'éléments de source de lumière et pré-exposer le sujet, moyennant quoi les moyens de pré-exposition sont configurés de sorte que, lorsque les moyens de pré-exposition (70A) effectuent de nouveau une pré-exposition avec l'élément de source de lumière (50A) correspondant à une région saturée éteint et que la région saturée est de nouveau saturée, les moyens de pré-exposition effectuent de nouveau une pré-exposition avec les éléments de source de lumière à la périphérie de l'élément de source de lumière correspondant à la région saturée éteints ;
des moyens de spécification (70A) pour spécifier, sur la base de l'image de pré-exposition du sujet qui est capturée par l'élément de capture d'image du fait de la pré-exposition et délivrée par les moyens de pré-exposition, des régions saturées qui seraient saturées lors d'une exposition pendant un temps d'exposition d'exposition réelle ; et
des moyens d'exposition réelle (70A) pour, sur la base des relations de correspondance, spécifier les éléments de source de lumière qui correspondent aux régions saturées, et exécuter une exposition réelle en raccourcissant le temps d'éclairage des éléments de source de lumière spécifiés.

2. Dispositif de formation d'image selon la revendication 1, comprenant des moyens de calcul pour calculer, sur la base d'une densité de la région saturée dans l'image de pré-exposition, le temps d'éclairage de l'élément de source de lumière correspondant à la région saturée de sorte que la région saturée ne soit pas saturée dans l'exposition réelle.

3. Dispositif de formation d'image selon la revendication 1 ou la revendication 2, comprenant des moyens de correction d'ombrage pour, sur la base des images capturées respectives obtenues en allumant respectivement la pluralité d'éléments de source de lumière et en formant l'image d'une plaque fluorescente de référence et du temps d'éclairage de l'élément de source de lumière correspondant à la région saturée, générer des données de correction d'ombrage et exécuter une correction d'ombrage.

4. Procédé de formation d'image comprenant :
l'allumage de la totalité d'une pluralité d'éléments de source de lumière qui éclairent un sujet, et la pré-exposition du sujet ;
sur la base d'une image de pré-exposition du sujet qui est capturée par un élément de capture d'image, qui capture une image du sujet, du fait de la pré-exposition, la spécification d'une région saturée qui est saturée lors d'une exposition pendant un temps d'exposition d'exposition réelle ;
la spécification d'un élément de source de lumière qui correspond à la région saturée, sur la base des relations de correspondance entre la pluralité d'éléments de source de lumière et les régions qui sont éclairées par la pluralité d'éléments de source de lumière respectivement ; et
l'exécution d'une exposition réelle en raccourcissant un temps d'éclairage de l'élément de source de lumière spécifié, moyennant quoi les moyens de pré-exposition sont configurés de sorte que, lorsque les moyens de pré-exposition (70A) effectuent une pré-exposition de nouveau avec l'élément de source de lumière (50A) correspondant à une région saturée éteint et que la région saturée est de nouveau saturée, les moyens de pré-exposition effectuent de nouveau une pré-exposition avec les éléments de source de lumière à la périphérie de l'élément de source de lumière correspondant à la région saturée éteints.

5. Programme de formation d'image conçu pour amener un ordinateur à effectuer le procédé selon la revendication 4.

6. Support de mémorisation pouvant être lu par un ordinateur (70A) mémorisant un programme qui amène un ordinateur (80) à exécuter un procédé de formation d'image, le procédé de formation d'image comprenant :
l'allumage de la totalité d'une pluralité d'éléments de source de lumière (50, 50A) qui éclairent un sujet, et la pré-exposition du sujet ;
sur la base d'une image de pré-exposition du sujet qui est capturée par un élément de capture d'image (10), qui capture une image du sujet, du fait de la pré-exposition, la spécification d'une région saturée qui est saturée lors d'une exposition pendant un temps d'exposition d'exposition réelle ;
la spécification d'un élément de source de lumière (50A) qui correspond à la région saturée, sur la base des relations de correspondance entre la pluralité d'éléments de source de lumière (50A) et les régions qui sont éclairées par la pluralité d'éléments de source de lumière respectivement ; et
l'exécution d'une exposition réelle en raccourcissant un temps d'éclairage de l'élément de source de lumière spécifié, moyennant quoi les moyens de pré-exposition sont configurés de sorte que, lorsque les moyens de pré-exposition (70A) effectue une pré-exposition de nouveau avec l'élément de source de lumière (50A) correspondant à une région saturée éteint et que la région saturée est de nouveau saturée, les moyens de pré-exposition effectuent une pré-exposition de nouveau avec les éléments de source de lumière à la périphérie de l'élément de source de lumière correspondant à la région saturée éteints.
